# EUROPEAN PATENT APPLICATION

(11) **EP 4 668 710 A1**
(43) Date of publication of application: **24.12.2025**
(21) Application number: 25180700.4
(22) Date of filing: 04.06.2025
(51) Int. Cl.: H04L 61/5061, H04W 4/021, H04W 12/63, H04W 12/80

(54) **INTERNET PROTOCOL POOL ALLOCATION BASED ON USER PLANE NODE LOCATION**

(30) Priority: 17.06.2024 US 202418745767
(71) Applicant: T-Mobile USA, Inc., Bellevue, WA 98006-1350 (US)
(72) Inventor: ARUNACHALAM, Kameswaran, Bellevue, 98006 (US); PATEL, Rushabhkumar, Bellevue, 98006 (US); PAL, Rahul, Bellevue, 98006 (US)
(74) Representative: Suddaby, Mark Edward

(57) **Abstract**

Described herein are techniques and systems for allocating Internet Protocol (IP) pools amongst user plane nodes in a distributed user plane architecture based on location information associated with the individual user plane nodes. In an example process, a control plane node of a telecommunication network receives, from a user plane node of the telecommunication network, location information during a packet forwarding control protocol (PFCP) association setup procedure, identifies, from a set of IP pools associated with the control plane node, an IP pool that is associated with matching location information that matches the location information received from the user plane node, and assigns the IP pool to the user plane node. By allocating IP pools in this manner, mobile-initiated scams, fraud, and/or cybersecurity attacks can be mitigated.

## Description

### BACKGROUND

In Fourth Generation (4G) and Fifth Generation (5G) networks, a control plane node can serve multiple user plane nodes. This type of deployment of network functions in a telecommunication network is sometimes referred to as a distributed user plane architecture. In this type of architecture, when Internet Protocol (IP) pools are allocated to the user plane nodes for use in subsequently assigning IP addresses to end user devices, a centralized control plane node randomly assigns an IP pool to each of the user plane nodes. This random assignment of IP pools to the user plane nodes can lead to, among other things, the proliferation of mobile-initiated scams, fraud, and/or cybersecurity attacks from bad actors because IP addresses that are assigned to end user devices of those bad actors cannot be adequately leveraged to narrow down the whereabouts of the bad actors.

### BRIEF DESCRIPTION OF THE DRAWINGS

The detailed description is set forth with reference to the accompanying figures. In the figures, the left-most digit(s) of a reference number identifies the figure in which the reference number first appears. The same reference numbers in different figures indicate similar or identical items.
FIG. 1 is a diagram illustrating an example distributed user plane architecture, and a technique for assigning IP pools to user plane nodes based on location information associated with the user plane nodes.
FIG. 2 is a flow diagram of an illustrative process for operations by a control plane node of a telecommunication network to assign an IP pool to a user plane node of the telecommunication network based on location information associated with the user plane node.
FIG. 3 is a flow diagram of an illustrative process for operations by a user plane node of a telecommunication network and a control plane node of the telecommunication network to assign, and reassign, an IP pool to the user plane node based on location information associated with the user plane node.
FIG. 4 is a schematic diagram of a computing device capable of implementing the techniques described herein.

### DETAILED DESCRIPTION

This disclosure is directed in part to allocating IP pools amongst user plane nodes in a distributed user plane architecture based on location information associated with the individual user plane nodes. As used herein, an "IP pool" means a range or a grouping of IP addresses. In the context of IPv6 addresses, for example, an IP pool can be an IP address prefix. In the context of IPv4 addresses, as another example, an IP pool can be a subnet. To illustrate, network functions in a telecommunication network (e.g., a 5G network, a 4G network, etc.) can be deployed in accordance with a distributed user plane architecture whereby a centralized control plane node serves multiple user plane nodes. In a 5G network implementation, the centralized control plane node can be a session management function (SMF), and the multiple user plane nodes can be multiple user plane functions (UPFs). In a 4G network implementation, the centralized control plane node can be a serving gateway control plane function (SGW-C) and/or a packet data network gateway control plane function (PGW-C), and the multiple user plane nodes can be multiple serving gateway user plane functions (SGW-Us) and/or multiple packet data network gateway user plane functions (PGW-Us).

During a packet forwarding control protocol (PFCP) association setup procedure, the centralized control plane node receives, from one of the user plane nodes, location information, such as a string of characters indicating a multiple-system operator (MSO) location, associated with the user plane node. In some examples, this location information is included in an information element (IE) (e.g., an optional IE) of a PFCP association setup message sent from the user plane node to the control plane node during the PFCP association setup procedure. Upon receiving the location information, the control plane node identifies, from a set of IP pools associated with the control plane node, an IP pool that is associated with matching location information that matches the location information received from the user plane node, and assigns the identified IP pool to the user plane node. This process can iterate for remaining user plane nodes in the distributed user plane architecture as respective PFCP association setup procedures occur between the centralized control plane node and respective ones of the remaining user plane nodes, resulting in the allocation of IP pools amongst the user plane nodes based on location information associated with the individual user plane nodes.

By allocating IP pools based on location information associated with user plane nodes in a distributed user plane architecture, mobile-initiated scams, fraud, and/or cybersecurity attacks can be mitigated. For example, with the techniques, devices, and systems described herein, a service provider (e.g., a network operator) can ensure that they are compliant with something called a "geofencing feature," which is designed to detect mobile-initiated scams, fraud, and/or cybersecurity attacks. To illustrate, consider an example where a user equipment (UE) sends a malformed packet to a telecommunication network in an attempt to bring down network equipment. In this example, since a user plane node (e.g., a UPF, in a 5G network implementation) is assigned an IP pool based on location information (e.g., a string of characters indicating a MSO location) associated with the user plane node, the IP address assigned to the UE is also associated with the same location information. For example, if the UE registers with the network and is assigned an IP address associated with a particular MSO location of the user plane node selected to serve the UE, law enforcement can use the IP address of the UE to narrow down the whereabouts of a bad actor that may have initiated a cybersecurity attack (e.g., sending the malformed packet) via the UE.

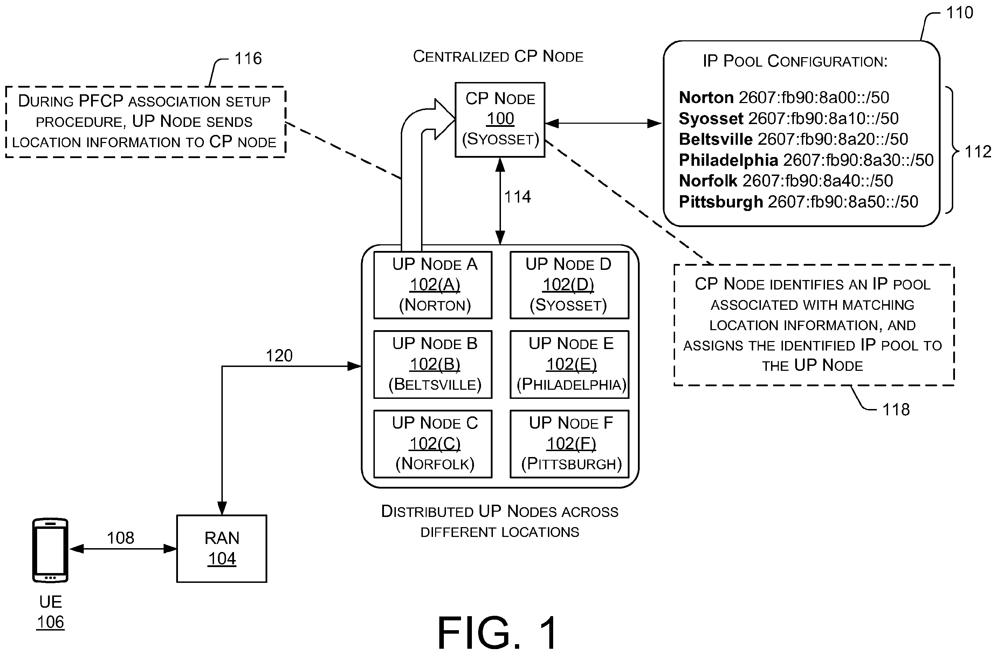

FIG. 1 is a diagram illustrating an example distributed user plane architecture, and a technique for assigning IP pools to user plane nodes based on location information associated with the user plane nodes. As shown in FIG. 1, a centralized control plane node 100 (abbreviated as "CP Node" in FIG. 1) of a telecommunication network may serve multiple user plane nodes 102(A)-(F) (each abbreviated as "UP Node" in FIG. 1) of the telecommunication network. In general, the nodes 100, 102 represent network functions (e.g., gateway network functions) that are deployed in the core network. The techniques, devices, and systems described herein can be implemented in a 4G network, a 5G network, or any future generation network that employes a distributed user plane architecture. In an implementation of a 5G network with a 5G core (5GC), the control plane node 100 may represent a SMF, and each of the user plane nodes 102(A)-(F) may represent a UPF. In an implementation of a 4G network with an evolved packet core (EPC), the control plane node 100 may represent a SGW-C and/or a PGW-C, and each of the user plane nodes 102(A)-(F) may represent a SGW-U and/or a PGW-U. Although six user plane nodes 102(A)-(F) are illustrated in FIG. 1, it is to be appreciated that a distributed user plane architecture may include fewer than six user plane nodes 102 or more than six user plane nodes 102. It should also be appreciated that the core network may include additional network functions not shown in FIG. 1, such as an access and mobility function (AMF), a policy control function (PCF), and/or a unified data management (UDM) in a 5G network implementation, or a mobility management entity (MME), a policy and charging rules function (PCRF), and/or a home subscriber server (HSS) in a 4G network implementation.

FIG. 1 also shows a radio access network (RAN) 104. The RAN 104 provides UEs, such as the UE 106, access to the core network, the core network including the nodes 100, 102. In various implementations, the UE 106 may be any sort of computing device capable of wireless communication, such as a mobile phone, tablet computer, watch, goggles, Internet-of-Things (IoT) device, permanent computer, etc. In a 5G network implementation, the RAN 104 may represent a new radio (NR) RAN. In a 4G network implementation, the RAN 104 may represent a node B or an eNodeB, for example. In some examples, a service provider (e.g., network operator) may use the distributed user plane architecture depicted in FIG. 1 to provision one or more wireless services to end users (or subscribers), such as a home Internet service.

When the UE 106 requests access to the core network (e.g., the nodes 100, 102), the UE 106 may utilize a radio interface 108 (or "air interface") to communicate with (e.g., send packets to and receive packets from) the RAN 104. This radio interface 108 may be a 5G-Uu interface in a 5G network implementation, or a Long Term Evolution (LTE)-Uu interface in a 4G network implementation. In an example, the UE 106 performs a registration procedure in order to attach to the network, whereby the UE 106 sends a registration request over the radio interface 108 to the RAN 104.

The RAN 104, in turn, may send a corresponding request with tracking area code (TAC) information to an AMF in a 5G network implementation, or to a MME in a 4G network implementation. The AMF or MME may query a network repository function (NRF) to obtain the control plane node 100 supported against the TAC to establish the bearer for the session. This control plane node 100 may select a particular user plane node 102, and may send a session request to the selected user plane node 102.

To optimize the assignment of an IP pool to the selected user plane node 102 within the distributed user plane architecture depicted in FIG. 1, an IP pool configuration 110 associated with the control plane node 100 may include a set of IP pools 112, wherein each IP pool 112 in the set is associated with location information corresponding to location information that is associated with a particular user plane node 102 amongst the multiple user plane nodes 102(A)-(F) in the distributed user plane architecture. For example, as shown in FIG. 1, the set of IP pools 112 in the IP pool configuration 110 includes a first IP pool "2607:fb90:8a00::/50" that is associated (e.g., tagged) with the location information "Norton." Meanwhile, a second IP pool "2607:fb90:8a10::/50" is associated (e.g., tagged) with the location information "Syosset,", a third IP pool "2607:fb90:8a20::/50" is associated (e.g., tagged) with the location information "Beltsville," a fourth IP pool "2607:fb90:8a30::/50" is associated (e.g., tagged) with the location information "Philadelphia,", a fifth IP pool "2607:fb90:8a40::/50" is associated (e.g., tagged) with the location information "Norfolk," and, finally, a sixth IP pool "2607:fb90:8a50::/50" is associated (e.g., tagged) with the location information "Pittsburgh." This example IP pool configuration 110 depicted in FIG. 1 may be stored in a data store (e.g., a relational database) that is accessible to the control plane node 100.

As shown in FIG. 1, each of the user plane nodes 102(A)-(F) may utilize an interface 114 to communicate with (e.g., send packets to and receive packets from) the control plane node 100. This interface 114 may be a N4 interface in a 5G network implementation, or a Sx interface in a 4G network implementation.

In the running example, the centralized control plane node 100 is tasked with assigning an IP pool 112 to the user plane node 102 that was selected for serving the UE 106. Consider an example where the control plane node 100 selects user plane node 102(A) ("UP Node A"). In this example, the control plane node 100 may initiate a PFCP association setup procedure with the selected user plane node 102(A) over the interface 114. Alternatively, the PFCP association setup procedure may be initiated by the selected user plane node 102(A). In general, the PFCP association setup procedure is used to establish a connection (or connectivity) between the control plane node 100 and a particular user plane node 102 involved in the PFCP association setup procedure. Regardless of which node initiated the PFCP association setup procedure, during the PFCP association setup procedure, the user plane node 102(A) sends location information to the control plane node 100, and the control plane node 100 receives the location information from the user plane node 102(A), as illustrated by reference numeral 116 in FIG. 1. The location information may be transmitted, at 116, via the interface 114 (e.g., N4 interface, Sx interface, etc.). In some examples, the location information that is received, at 116, by the control plane node 100 may be a string of characters indicating a MSO location (or "market") associated with the user plane node 102(A), such as the string "Norton." In some examples, the location information that is received, at 116, by the control plane node 100 is limited to a string of no more than N characters. In an example where N=3 characters, the location information may be the string "NOR," which corresponds to the MSO location "Norton." In some examples, the location information that is received, at 116, by the control plane node 100 is included in an IE (e.g., an optional IE) of a PFCP association setup message sent from the user plane node 102(A) to the control plane node 100 during the PFCP association setup procedure. For example, the user plane node 102(A) may send, to the control plane node 100, a PFCP association setup message (e.g., a PFCP association setup request or a PFCP association setup response) that includes an optional IE specifying the location information associated with the user plane node 102(A). Although the example above describes specifying the location information in an IE of a PFCP association setup message, it is to be appreciated that the location information may be specified in any suitable message using any other suitable message attribute, such as a field of the message that is designated for the location information.

Upon receiving the location information (e.g., in a PFCP association setup message) from the user plane node 102(A), the control plane node 100 identifies, from a set of IP pools 112 associated with the control plane node 100, an IP pool 112 that is associated with matching location information that matches the location information received from the user plane node 102(A). For example, if the location information received from the user plane node 102(A) is the string of characters "Norton" or "NOR," the control plane node 100 may identify, within the IP pool configuration 110, the IP pool "2607:fb90:8a00::/50" as being associated with matching location information (e.g., the string of characters "Norton" or "NOR"). In some examples, the control plane node 100 performs an internal database lookup to identify, within the IP pool configuration 110, matching location information that matches the location information received from the user plane node 102(A). Accordingly, once the to-be-assigned IP pool 112 is identified, the control plane node 100 assigns the identified IP pool 112 (e.g., the IP pool "2607:fb90:8a00::/50") to the user plane node 102(A), as illustrated by reference numeral 118 in FIG. 1.

As illustrated in FIG. 1, an interface 120 can be used to facilitate a communication between the RAN 104 and at least the selected user plane node 102(A). That is, the RAN 104 may utilize the interface 120 to communicate with (e.g., send packets to and receive packets from) one or more of the user plane nodes 102(A)-(F), such as the user plane node 102(A) that has been assigned the IP pool 112 (e.g., the IP pool "2607:fb90:8a00::/50"), as described above. The interface 120 may be a N3 interface in a 5G network implementation, or a S1-U interface in a 4G network implementation. In the running example, the user plane node 102(A) may assign an IP address to the UE 106 based at least in part on the IP pool 112 (e.g., the IP pool "2607:fb90:8a00::/50") that the control plane node 100 assigned to the user plane node 102(A). In this way, the UE 106 is assigned an IP address that is associated with location information specific to the user plane node 102(A) that is serving the UE 106. As a result, law enforcement can use the IP address of the UE 106 (e.g., for the geofencing feature noted above) to narrow down the whereabouts of a bad actor that may have initiated a scam, fraud, and/or cybersecurity attack via the UE 106. In some examples, the IP pool 112 assigned to the user plane node 102(A) can be an IP address prefix, which may be the case with IPv6 addresses. In some examples, the IP pool 112 assigned to the user plane node 102(A) can be a subnet, which may be the case with IPv4 addresses. In some examples, an inquiry may be received by the telecommunication network (e.g., the user plane node 102(A), the control plane node 100, etc.), wherein the inquiry includes an IP address of the IP pool 112 that is selected by the telecommunication network to serve the UE 106. In response to receiving such an inquiry, the telecommunication network (e.g., the user plane node 102(A), the control plane node 100, etc.) may provide the location information associated with the IP pool 112 as location information for the UE 106. Accordingly, the UE 106 can be associated with the same location information (e.g., the string of characters "Norton" or "NOR") as the user plane node 102(A), in some examples.

While the technique described above with reference to FIG. 1 involves the assignment of a single IP pool 112 to a single user plane node 102(A), it is to be appreciated that the centralized control plane node 100 may iterate respective assignments of IP pools 112 to remaining ones of the user plane nodes 102(B)-(F) within the distributed user plane architecture as respective PFCP association setup procedures occur between the centralized control plane node 100 and respective ones of the remaining user plane nodes 102(B)-(F). This results in the allocation of IP pools 112 amongst the user plane nodes 102(A)-(F) based on location information associated with the individual user plane nodes 102.

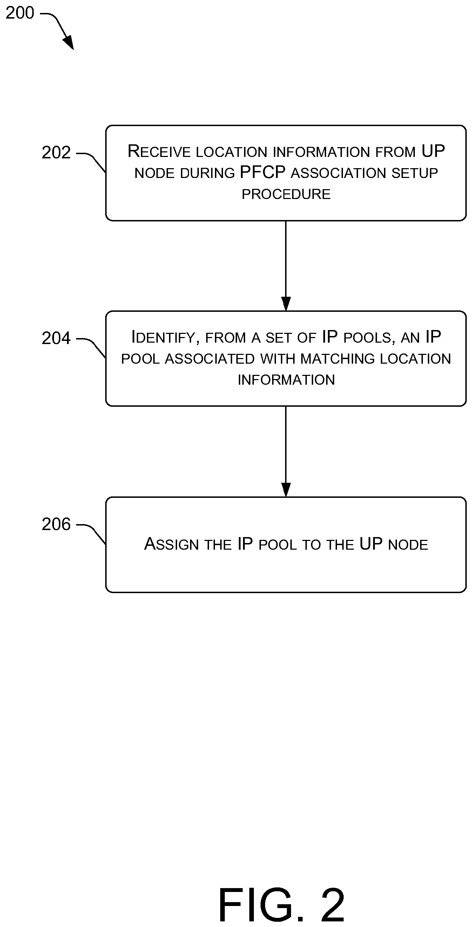

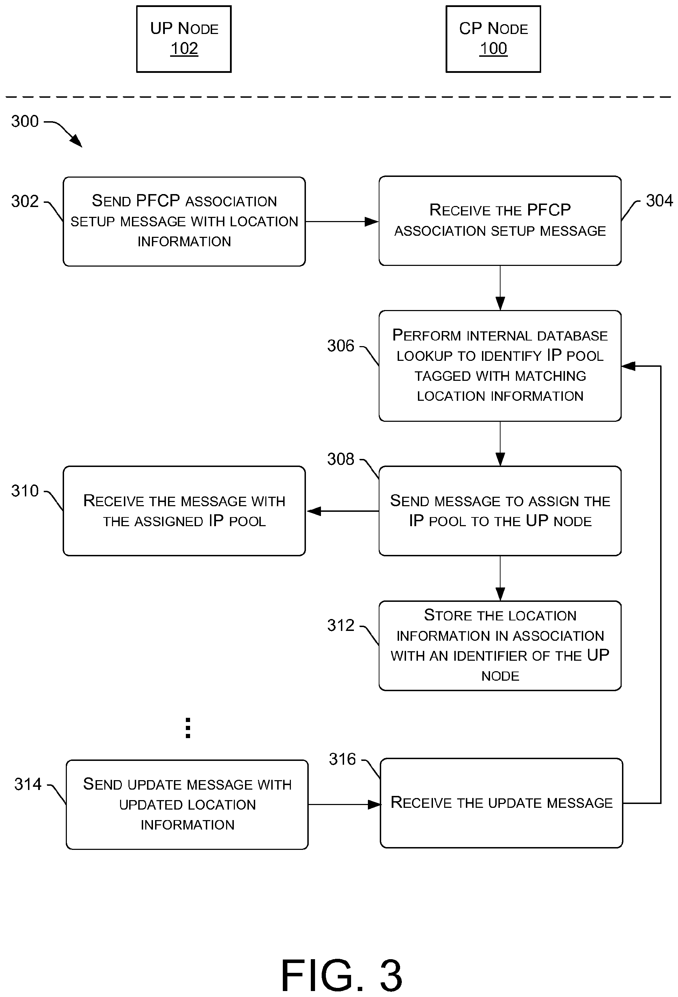

FIGS. 2 and 3 illustrate example processes. These processes are illustrated as logical flow graphs, each operation of which represents a sequence of operations that can be implemented in hardware, software, or a combination thereof. In the context of software, the operations represent computer-executable instructions stored on one or more computer-readable storage media that, when executed by one or more processors, perform the recited operations. Generally, computer-executable instructions include routines, programs, objects, components, data structures, and the like that perform particular functions or implement particular abstract data types. The order in which the operations are described is not intended to be construed as a limitation, and any number of the described operations can be omitted or combined in any order and/or in parallel to implement the processes.

FIG. 2 is a flow diagram of an illustrative process 200 for operations by a control plane node 100 of a telecommunication network to assign an IP pool 112 to a user plane node 102 of the telecommunication network based on location information associated with the user plane node 102.

As illustrated at 202, a control plane node 100 receives, from a user plane node 102, location information during a PFCP association setup procedure. For example, the control plane node 100 may receive the location information from the user plane node 102 in a PFCP association setup message at 202. In some examples, such a message is received over the interface 114 (e.g., an N4 interface in a 5G network implementation). Depending on which node initiated the PFCP association setup procedure, the PFCP association setup message may be a PFCP association setup request or a PFCP association setup response. For example, if the control plane node 100 initiates the PFCP association setup procedure by sending a PFCP association setup request to the user plane node 102, the control plane node 100 may receive a PFCP association setup response from the user plane node 102 at 202, wherein the PFCP association setup response includes the location information associated with the user plane node 102. In a 5G network implementation, the control plane node 100 may be a centralized SMF, and the user plane node 102 may be one of multiple UPFs in a distributed user plane architecture. In some examples, the location information is included in an IE (e.g., an optional IE) of the PFCP association setup message received at 202. In some examples, the location information includes a string of characters, such as a string of characters that indicates a MSO location (e.g., "Norton" or "NOR," "Syosset" or "SYO," "Beltsville" or "BEL," "Philadelphia" or "PHI," "Norfolk" or "NRF," "Pittsburgh" or "PIT," etc.).

At 204, the control plane node 100 identifies, from a set of IP pools 112 associated with the control plane node 100, an IP pool 112 that is associated with matching location information that matches the location information received, at 202, from the user plane node 102. In an example, if the location information received, at 202, from the user plane node 102 includes the string of characters "Syosset" or "SYO," the control plane node 100 may identify, at 204, the IP pool "2607:fb90:8a10::/50" because that IP pool 112 is associated (e.g., tagged) with matching location information (e.g., "Syosset" or "SYO"). In some examples, the control plane node 100 performs an internal database lookup to identify, at 204, matching location information within the IP pool configuration 110 that matches the location information received, at 202, from the user plane node 102.

At 206, the control plane node 100 assigns the IP pool 112 identified at 204 to the user plane node 102. In some examples, the IP pool 112 is assigned to the user plane node 102 at 206 by the control plane node 100 sending, to the user plane node 102, a message including the IP pool 112 identified at 204. In some examples, such a message is sent over the interface 114 (e.g., an N4 interface in a 5G network implementation). In some examples, the IP pool 112 assigned to the user plane node 102 at 206 can be an IP address prefix (e.g., in the context of IPv6 addresses), or a subnet (e.g., in the context of IPv4 addresses). Accordingly, the process 200 results in the assignment of an IP pool 112 to a user plane node 102 in a distributed user plane architecture, wherein the assignment of the IP pool 112 is based on location information associated with the user plane node 102, which can mitigate mobile-initiated scams, fraud, and/or cybersecurity attacks, as described above. Moreover, the process 200 can iterate for other user plane nodes 102 in the distributed user plane architecture so that IP pools 112 are allocated to the user plane nodes 102 (e.g., the user plane nodes 102(A)-(F) depicted in FIG. 1) based on location information associated with the individual user plane nodes 102.

FIG. 3 is a flow diagram of an illustrative process 300 for operations by a user plane node 102 of a telecommunication network and a control plane node 100 of the telecommunication network to assign, and reassign, an IP pool 112 to the user plane node 102 based on location information associated with the user plane node 102.

As illustrated at 302, a user plane node 102 sends location information in a PFCP association setup message to a control plane node 100. As mentioned above, such a message may be sent over the interface 114 (e.g., an N4 interface in a 5G network implementation). Depending on which node initiated the PFCP association setup procedure, the PFCP association setup message sent at 302 may be a PFCP association setup request or a PFCP association setup response. For example, if the control plane node 100 initiates the PFCP association setup procedure by sending a PFCP association setup request to the user plane node 102 prior to 302, the user plane node 102 may send a PFCP association setup response to the control plane node 100 at 302. Alternatively, if the user plane node 102 initiates the PFCP association setup procedure, the PFCP association setup message sent at 302 may be a PFCP association setup request. In any case, the PFCP association setup message sent at 302 includes location information associated with the user plane node 102. In a 5G network implementation, the control plane node 100 may be a centralized SMF, and the user plane node 102 may be one of multiple UPFs in a distributed user plane architecture. In some examples, the location information is included in an IE (e.g., an optional IE) of the PFCP association setup message sent at 302. In some examples, the location information includes a string of characters, such as a string of characters that indicates a MSO location (e.g., "Norton" or "NOR," "Syosset" or "SYO," "Beltsville" or "BEL," "Philadelphia" or "PHI," "Norfolk" or "NRF," "Pittsburgh" or "PIT," etc.).

At 304, the control plane node 100 receives the PFCP association setup message from the user plane node 102, the message carrying the location information. That is, the control plane node 100 receives, at 304, the location information from the user plane node 102 in the PFCP association setup message.

At 306, the control plane node 100 performs an internal database lookup to identify, from a set of IP pools 112 in an IP pool configuration 110 associated with the control plane node 100, an IP pool 112 that is tagged with matching location information that matches the location information received from the user plane node 102. In an example, if the location information received from the user plane node 102 includes the string of characters "Beltsville" or "BEL," the control plane node 100 may process this location information within the PFCP association setup message to identify, at 306, the IP pool "2607:fb90:8a20::/50" because that IP pool 112 is tagged with matching location information (e.g., "Beltsville" or "BEL") within the IP pool configuration 110.

At 308, the control plane node 100 sends, to the user plane node 102, a message including the IP pool 112 identified at 306 in order to assign the IP pool 112 to the user plane node 102. Such a message may be sent over the interface 114 (e.g., an N4 interface in a 5G network implementation).

At 310, the user plane node 102 receives, from the control plane node 100, the message including the IP pool 112 that has been assigned to the user plane node 102. That is, the user plane node 102 receives, at 310, the assigned IP pool 112 from the control plane node 100 in the message sent at 308. In some examples, the IP pool 112 that is assigned to the user plane node 102 via the message received at 310 can be an IP address prefix (e.g., in the context of IPv6 addresses), or a subnet (e.g., in the context of IPv4 addresses).

At 312, the control plane node 100 stores, in memory, the location information received, at 304, from the user plane node 102 in the PFCP association setup message, wherein the location information is stored in association with an identifier of the user plane node 102. The control plane node 100 may store the location information temporarily or permanently at 312. Storing the location information in association with an identifier of the user plane node 102 at 312 may allow the control plane node 100 to maintain a record of the user plane node's location information so that the control plane node 100 effectively "remembers" the location information associated with that user plane node 102. In some examples, at 312, the control plane node 100 may store the location information in a table (e.g., a relational database) that maps an identifier of the user plane node 102 to the location information. By storing the location information at 312, if connectivity is subsequently lost between the control plane node 100 and the user plane node 102, when connectivity is regained between the user plane node 102 and the control plane node 100, such as when either or both nodes come back online after losing connectivity, the control plane node 100 can look up the identifier of the user plane node 102 in the table and reassign the same IP pool 112 that the control plane node 100 previously assigned to the user plane node 102. Additionally, or alternatively, during a session establishment procedure (e.g., a PFCP session establishment procedure between the control plane node 100 and the user plane node 102), the control plane node 100 may look up the information stored at 312, which may allow for setting up the session more efficiently than without the stored information.

At 314, at some point in time after the user plane node 102 received the message at 310 with its assigned IP pool 112 (as indicated by the ellipses in FIG. 3), the user plane node 102 may send updated location information in an update message to the control plane node 100. For example, a service provider (e.g., network operator) may change the existing location information (e.g., "Beltsville") associated with the user plane node 102 to the updated location information (e.g., "Philadelphia"), and, in response to this change to the location information, the user plane node 102 may send (e.g., broadcast) the updated location information in the update message at 314. This update message may be sent over the interface 114 (e.g., an N4 interface in a 5G network implementation).

At 316, the control plane node 100 receives the update message from the user plane node 102, the message carrying the updated location information. That is, the control plane node 100 receives, at 316, the updated location information from the user plane node 102 in the update message.

As shown by the arrow from 316 to 306, the operations associated with 306-312 may be performed (again, with respect to the same user plane node 102) upon receipt of the update message at 316. For example, at 306 (following 316), the control plane node 100 performs an internal database lookup to identify, from the set of IP pools 112 within the IP pool configuration 110 associated with the control plane node 100, a new (second) IP pool 112 that is tagged with matching location information that matches the updated location information received, at 316, from the user plane node 102. In an example, if the updated location information received from the user plane node 102 at 316 includes the string of characters "Philadelphia" or "PHI," the control plane node 100 may process this updated location information within the update message to identify, at 306, the new (second) IP pool "2607:fb90:8a30::/50" because that new (second) IP pool 112 is tagged with matching location information (e.g., "Philadelphia" or "PHI") in the IP pool configuration 110.

At 308 (following 316), the control plane node 100 sends, to the user plane node 102, a message including the new (second) IP pool 112 identified at 306 (following 316) in order to assign the new (second) IP pool 112 to the user plane node 102. Such a message may be sent over the interface 114 (e.g., an N4 interface in a 5G network implementation). In this manner, the control plane node 100 is configured to reassign new IP pools 112 to an individual user plane node 102 based on updated location information received in update messages at 316.

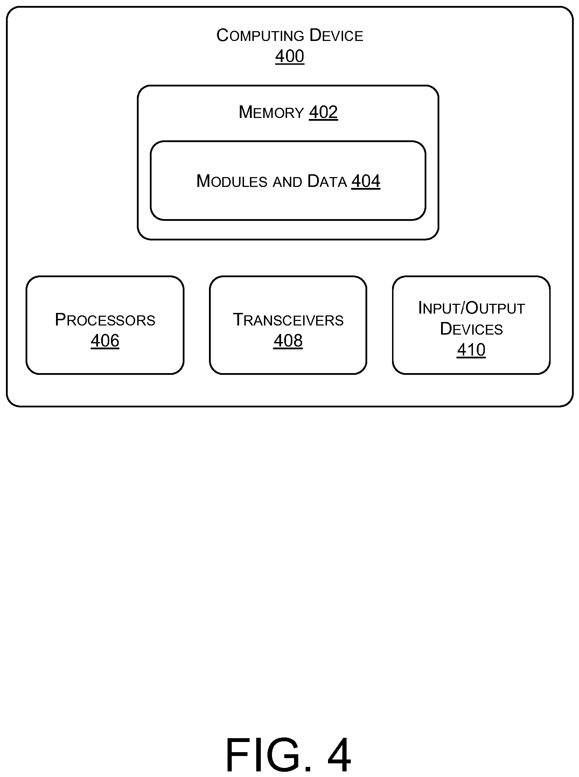

FIG. 4 is a schematic diagram of a computing device 400 capable of implementing the techniques described herein. As shown, the computing device 400 includes a memory 402 storing modules and data 404, processor(s) 406, transceivers 408, and input/output devices 410.

In various examples, the memory 402 can include system memory, which may be volatile (such as RAM), non-volatile (such as ROM, flash memory, etc.) or some combination of the two. The memory 402 can further include non-transitory computer-readable media, such as volatile and nonvolatile, removable and non-removable media implemented in any method or technology for storage of information, such as computer readable instructions, data structures, program modules, or other data. System memory, removable storage, and non-removable storage are all examples of non-transitory computer-readable media. Examples of non-transitory computer-readable media include, but are not limited to, RAM, ROM, EEPROM, flash memory or other memory technology, CD-ROM, digital versatile discs (DVD) or other optical storage, magnetic cassettes, magnetic tape, magnetic disk storage or other magnetic storage devices, or any other non-transitory medium which can be used to store the desired information.

The memory 402 can include one or more software or firmware elements, such as computer-readable instructions that are executable by the one or more processors 406. For example, the memory 402 can store computer-executable instructions associated with modules and data 404. The modules and data 404 can include a platform, operating system, and applications, and data utilized by the platform, operating system, and applications. Further, the modules and data 404 can implement any of the functionality for the control plane node 100, the user plane node 102, or any other node/device described and illustrated herein.

In various examples, the processor(s) 406 can be a central processing unit (CPU), a graphics processing unit (GPU), or both CPU and GPU, or any other type of processing unit. Each of the one or more processor(s) 406 may have numerous arithmetic logic units (ALUs) that perform arithmetic and logical operations, as well as one or more control units (CUs) that extract instructions and stored content from processor cache memory, and then executes these instructions by calling on the ALUs, as necessary, during program execution. The processor(s) 406 may also be responsible for executing all computer applications stored in the memory 402, which can be associated with types of volatile (RAM) and/or nonvolatile (ROM) memory.

The transceivers 408 can include modems, interfaces, antennas, Ethernet ports, cable interface components, and/or other components that perform or assist in exchanging wireless communications, wired communications, or both.

While the computing device need not include input/output devices 410, in some implementations it may include one, some, or all of these. For example, the input/output devices 410 can include a display, such as a liquid crystal display or any other type of display. For example, the display may be a touch-sensitive display screen and can thus also act as an input device or keypad, such as for providing a soft-key keyboard, navigation buttons, or any other type of input. The input/output devices 410 can include any sort of output devices known in the art, such as a display, speakers, a vibrating mechanism, and/or a tactile feedback mechanism. Output devices can also include ports for one or more peripheral devices, such as headphones, peripheral speakers, and/or a peripheral display. The input/output devices 410 can include any sort of input devices known in the art. For example, input devices can include a microphone, a keyboard/keypad, and/or a touch-sensitive display, such as the touch-sensitive display screen described above. A keyboard/keypad can be a push button numeric dialing pad, a multi-key keyboard, or one or more other types of keys or buttons, and can also include a joystick-like controller, designated navigation buttons, or any other type of input mechanism.

Although features and/or methodological acts are described above, it is to be understood that the appended claims are not necessarily limited to those features or acts. Rather, the features and acts described above are disclosed as example forms of implementing the claims.

## Claims

1. A system comprising:
one or more processors;
a user plane node of a telecommunication network, the user plane node configured to be executed by the one or more processors to send location information in a packet forwarding control protocol (PFCP) association setup message to a control plane node of the telecommunication network; and
the control plane node configured to be executed by the one or more processors to:
receive the location information from the user plane node in the PFCP association setup message;
identify, from a set of Internet Protocol (IP) pools in an IP pool configuration associated with the control plane node, an IP pool that is tagged with matching location information that matches the location information received from the user plane node; and
assign the IP pool to the user plane node.

2. The system of claim 1, wherein:
the control plane node is a session management function (SMF); and
the user plane node is a user plane function (UPF).

3. The system of claim 1, wherein:
the control plane node is a centralized control plane node in a distributed user plane architecture; and
the user plane node is one of multiple user plane nodes in the distributed user plane architecture.

4. The system of any preceding claim, wherein the location information is included in an information element (IE) of the PFCP association setup message.

5. The system of any preceding claim, wherein the location information comprises a string of characters indicating a multiple-system operator (MSO) location.

6. A method comprising:
receiving, by a control plane node of a telecommunication network, from a user plane node of the telecommunication network, location information during a packet forwarding control protocol (PFCP) association setup procedure;
identifying, by the control plane node, from a set of Internet Protocol (IP) pools associated with the control plane node, an IP pool that is associated with matching location information that matches the location information received from the user plane node; and
assigning, by the control plane node, the IP pool to the user plane node.

7. The method of claim 6, wherein:
the control plane node is a session management function (SMF); and
the user plane node is a user plane function (UPF).

8. The method of claim 6, wherein:
the control plane node is a centralized control plane node in a distributed user plane architecture; and
the user plane node is one of multiple user plane nodes in the distributed user plane architecture.

9. The method of any of claims 6 to 8, wherein receiving the location information comprises receiving the location information in a PFCP association setup message.

10. The method of any of claims 6 to 9, wherein the location information is included in an information element (IE) of the PFCP association setup message.

11. The method of any of claims 6 to 10, wherein the location information comprises a string of characters.

12. The method of any of claims 6 to 11, wherein, in response to receiving an inquiry that includes an IP address of the IP pool that is selected by the telecommunication network to serve a user equipment (UE), providing, by the telecommunication network, the location information associated with the IP pool as location information for the UE.

13. The method of any of claims 6 to 12, further comprising storing, by the control plane node, in memory, the location information in association with an identifier of the user plane node.

14. The method of any of claims 6 to 13, wherein the IP pool is a first IP pool, and wherein the matching location information is first matching location information, the method further comprising:
receiving, from the user plane node, updated location information;
identifying, from the set of IP pools, a second IP pool that is associated with second matching location information that matches the updated location information received from the user plane node; and
reassigning the second IP pool to the user plane node.

15. A computer-readable storage medium having programming instructions stored thereon that, when executed by one or more processors of a control plane node of a telecommunication network, cause the control plane node to perform the method of any of claims 6 to 14.
